# EUROPEAN PATENT APPLICATION

(11) **EP 3 760 837 A1**
(43) Date of publication of application: **06.01.2021**
(21) Application number: 20193720.8
(22) Date of filing: 12.05.2017
(51) Int. Cl.: F01D 17/14, F01D 17/18, F02B 37/02, F02B 37/12, F02C 6/12

(54) **CONNECTION VALVE FOR EXHAUST GAS TURBOCHARGERS WITH MULTI-FLOW TURBINES**

(30) Priority: 25.05.2016 DE 202016102796 U
(62) Divisional of application: 17726056.9
(71) Applicant: Borgwarner Inc., Auburn Hills, Michigan 48326 (US)
(72) Inventor: VULETIC, Aleksandar, 67292 Kirchheimbolanden (DE); CEMPIREK, Ondrej, 67295 Bolanden (CZ); WINKLER, Ferdinand, Asheville, NC 28806 (US)
(74) Representative: Peterreins Schley

(57) **Abstract**

The invention relates to a connection valve for a multi-flow turbine of an exhaust gas turbocharger and/or a turbine with such a connection valve. The connection valve comprises a housing and a valve body, wherein the valve body is arranged in the housing to be displaceable along a first axis. The valve body has a closure part which is designed to close a connection opening between a first volute and a second volute of the multi-flow turbine.

## Description

### Field of the Invention

The present invention relates to a connection valve for a multi-flow turbine of an exhaust gas turbocharger, a corresponding turbine, and an exhaust gas turbocharger.

### Background Information

Increasingly more vehicles of the more recent generation are equipped with turbochargers. Known turbochargers have a turbine housing, a compressor housing, and a bearing housing which is conventionally connected to the turbine housing on the turbine side and to the compressor housing on the compressor side. A shaft, which supports the turbine wheel and the compressor wheel, is mounted in the bearing housing. According to the design of the turbocharger, additional components may be provided, for example, waste gate arrangements or bypass devices.

According to the demand profile, modern exhaust gas turbochargers are additionally equipped with multi-flow turbines and/or turbine housings to prevent negative influences of the pressure gradient (in the exhaust manifolds) on the performance and efficiency of the turbine and thus the exhaust gas turbocharger. The exhaust gases of specific cylinders are thereby guided into respectively assigned volutes of the turbine housing. This type of exhaust gas turbocharger is particularly advantages at low rotation speeds of the engine and thus low exhaust gas volume flows. At high performance demands and thus high motor speeds, the exhaust gas volumes of the respective cylinders may increase sharply such that the maximum possible volume flow through the individual volutes are achieved or even exceeded. Consequently, backpressure is built up for the engine.

The object of the present invention is thus to provide a solution which reduces or alleviates the previously described negative effects.

### Brief Summary of the Invention

The present invention relates to a connection valve according to Embodiment1, a multi-flow turbine according to Embodiment10, and an exhaust gas turbocharger according to Embodiment15.

The connection valve according to the invention has a housing and a valve body which is arranged in the housing to be displaceable along a first axis. The valve body comprises a closure part which is designed to close a connection opening between a first volute and a second volute of a multi-flow turbine.

The connection valve according to the invention and/or a turbine or an exhaust gas turbocharger with such a connection valve facilitates that a connection opening between the volutes of the multi-flow turbine may be opened at high performance demands and thus high exhaust volume flows. If the connection opening is released, the exhaust gas flow from all cylinders may use the total maximum possible volume flow through all volutes of the turbine housing.

Another advantage is found in the specific configuration of the connection valve. Because the valve is configured as a gate valve, only very low forces are required to actuate the valve. The installation position of the valve likewise contributes to a reduction of the required forces, since the closure part does not have to be moved directly counter to the flow direction of the exhaust gas volume during opening or during closing of the connection valve, but instead is displaced approximately perpendicular to the flow direction. The design of the connection valve and its installation position additionally reduce leakage between the channels of the volutes in the closed state of the valve.

Additional advantages exist in the very simple structure and the simple production and assembly of the connection valve, whereby size scaling for the respective application (as a function of the size of the engines and the corresponding exhaust gas turbochargers) is quite possible.

In configurations, the valve body may have a shaft which extends arising from the closure part and parallel to the first axis. The shaft may extend through a corresponding, tubular through passage of the housing.

In configurations which are combinable with all previously described configurations, a bush may be provided. In particular, the bush may be arranged in the through passage between the shaft and the housing and may function as a bearing for the valve body. The bush made from a correspondingly selected material has the advantage that is functions as a bearing for the shaft and simultaneously facilitates a low friction axial movement of the shaft. The bush may have a collar on one end, said collar interacts with a corresponding flange surface of the housing. The collar functions to establish the position and/or to fix the bush in the housing and prevents slippage. At least one annular groove for accommodating a sealing means may be provided along the circumference of the shaft. In particular, for example, two or three annular grooves may be provided. O-rings may be used, for example, as sealing means. The grooves in combination with the sealing means create a seal with respect to the surroundings and are advantageous for eliminating leakage of the exhaust gas flow into the surroundings.

In configurations, which are combinable with all previously described configurations, the shaft may have a conical section. In particular, the conical section may simultaneously function as a stop surface and a sealing surface, whereby a seal with respect to the surroundings is created. Thus, leakage of the exhaust gas flow is likewise reduced or eliminated. The conical configuration is particularly advantageous at high rotational speeds/exhaust gas flows and thus a completely opened connection valve. The conical section may be provided in the area of the exit of the shaft out of the closure part. The housing or the bush may have a funnel-shaped section. The funnel-shaped section may function as stop surface and sealing surface, and interacts with the conical section of the shaft to generate the seal.

In configurations, which are combinable with all previously described configurations, the valve body may be configured as an integral part with the closure part and shaft. This has the advantage that the total number of components of the connection valve is low. Thus, the assembly is facilitated and the time required for assembly is shortened.

In configurations, which are combinable with all previously described configurations, the closure part may extend along a first main extension direction parallel to a second axis. The second axis runs approximately perpendicular to the first axis. The closure part may additionally extend along a second main extension direction parallel to the first axis. In particular, an extension parallel to the second axis may be greater than an extension parallel to the first axis. The closure part may have a first surface and a second surface which are arranged approximately parallel to a plane which is defined by the first axis and the second axis. In particular, the first and second surfaces may be connected to one another at the ends lying in the direction of the two axes via rounded-off edges. The closure part may additionally have first and second side surfaces, wherein the first axis is perpendicular to the first and second side surfaces. In particular, the shaft may extend out of one of the side surfaces.

In configurations, which are combinable with all previously described configurations, the housing may have cooling ribs on its outer side. The cooling ribs may be arranged in particular in the area of the through passage.

In configurations, which are combinable with all previously described configurations, the housing may comprise at least one fixing device for fixing the housing on a turbine housing.

In configurations, which are combinable with all previously described configurations, an actuator may be provided. The actuator may comprise an actuating element which is connected to the shaft in order to be able to displace said shaft along the first axis. The actuator may be connected to the housing.

The invention additionally comprises a multi-flow turbine for an exhaust gas turbocharger comprising a turbine housing, wherein the turbine housing has a first volute and a second volute which are separated from one another by a separating wall. A connection opening is provided in the separating wall, and corresponding flow channels of the first volute and the second volute are connected to one another via said connection opening. The multi-flow turbine additionally comprises a connection valve according to any one of the previously described configurations.

In configurations of the turbine, the connection valve may be coupled to the turbine housing in such a way that the closure part of the valve body moves approximately perpendicular to the flow direction of the exhaust gas in the area of the connection opening during opening and closing.

In configurations of the turbine, which are combinable with all previously described configurations, the connection valve may be coupled to the turbine housing in such a way that the closure part of the valve body completely closes the connection opening in a closed position of the connection valve.

In configurations of the turbine, which are combinable with all previously described configurations, a first groove may be provided in a first wall of the connection opening which is arranged approximately parallel to the second axis, said first groove is configured according to a side surface of the closure part and accommodates an edge area of the closure part in the closed position of the connection valve.

In configurations of the turbine, which are combinable with all previously described configurations, second and third walls of the connection opening, which lie opposite one another, are arranged approximately parallel to the first axis and have second and third grooves, wherein the rounded-off edges of the closure part are guided into the second and third grooves.

In configurations of the turbine, which are combinable with all previously described configurations, the housing of the connection valve may be fixed on the turbine housing.

In configurations of the turbine, which are combinable with all previously described configurations, the turbine housing may additionally have a recess in the outer wall in the area of the connection opening which allows the valve body to protrude into the turbine housing so that the closure part of the valve body completely closes the connection opening in a closed position of the connection valve.

In configurations of the turbine, which are combinable with all previously described configurations, the valve body with the closure part may be steplessly displaced, whereby a stepless opening and/or a stepless closing of the connection opening is facilitated. This has the advantage that the degree of opening of the connection opening may be exactly controlled.

In configurations of the turbine, which are combinable with all previously described configurations, the turbine housing comprises a main body and a connector, wherein the connection opening and the connection valve are arranged in the area of the connector. It is advantageous in this type of design that, according to the installation location and installation position of the exhaust gas turbocharger in the respective application, a turbine according to the invention may be provided with a connection valve via a corresponding connector.

The invention additionally comprises an exhaust gas turbocharger comprising a multi-flow turbine according to any one of the previously described configurations. As mentioned at the outset, an exhaust gas turbocharger of this type facilitates, for example at high performance demands and thus high exhaust gas volume flows, an opening of the connection opening between the volutes of the multi-flow turbine. Thus, the exhaust gas flow from all cylinders may use the total maximum possible volume flow through all volutes of the turbine housing.

Additional details and features of the invention are described by way of the following figures.

### Brief Description of the Drawings

- Figure 1: shows an isometric view of a partial section of the connection valve according to the invention according to one embodiment;
- Figure 2: shows a sectional view of the connection valve according to the invention according to the embodiment from Figure 1;
- Figure 3: shows an isometric view of a partial section of the connection valve according to the invention and a part of the turbine housing according to one embodiment;
- Figure 4: shows two cutaway views of the connection valve according to the invention and part of a turbine housing according to one embodiment.

### Detailed Description of the Invention

In the following, embodiments of the connection valve according to the invention, together with the multi-flow turbine according to the invention and/or an exhaust gas turbocharger equipped with such a turbine are described by way of the figures.

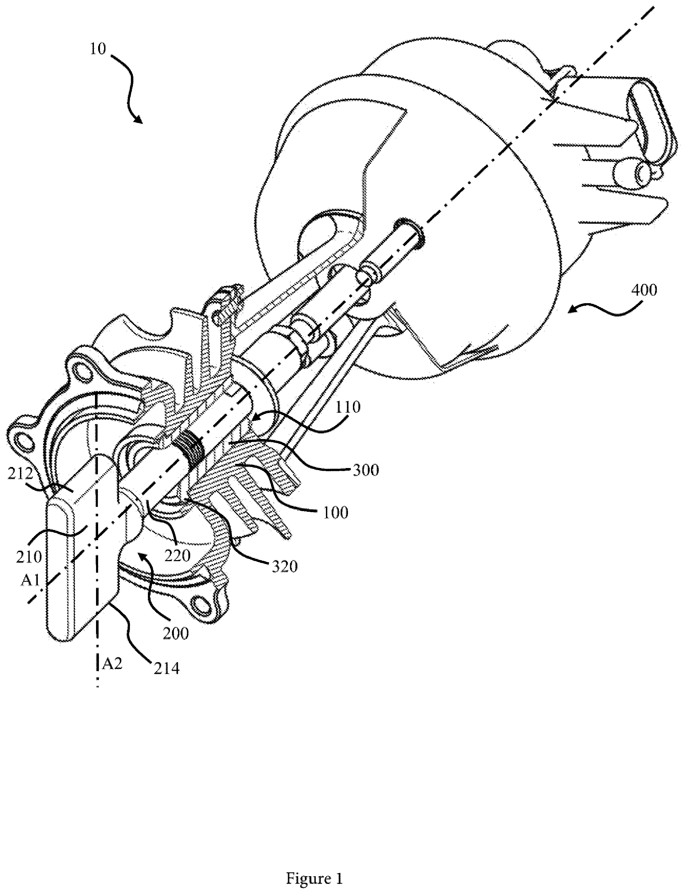

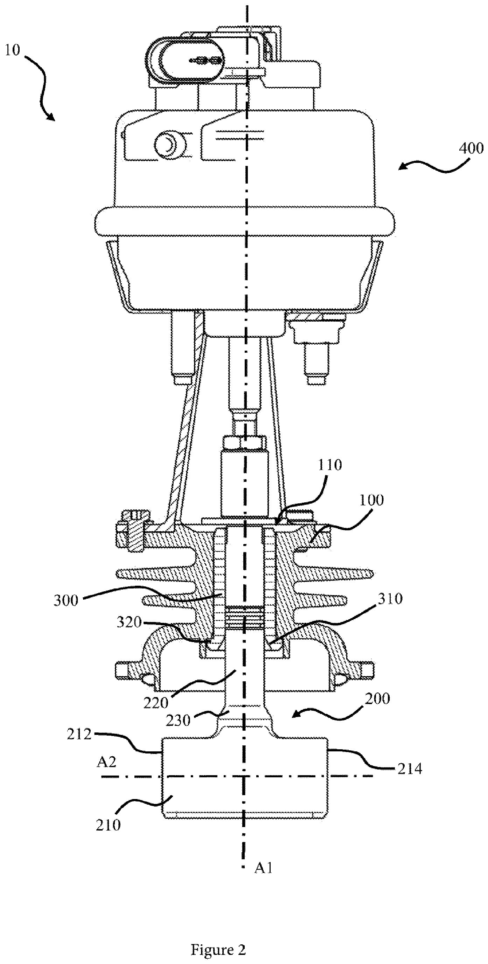

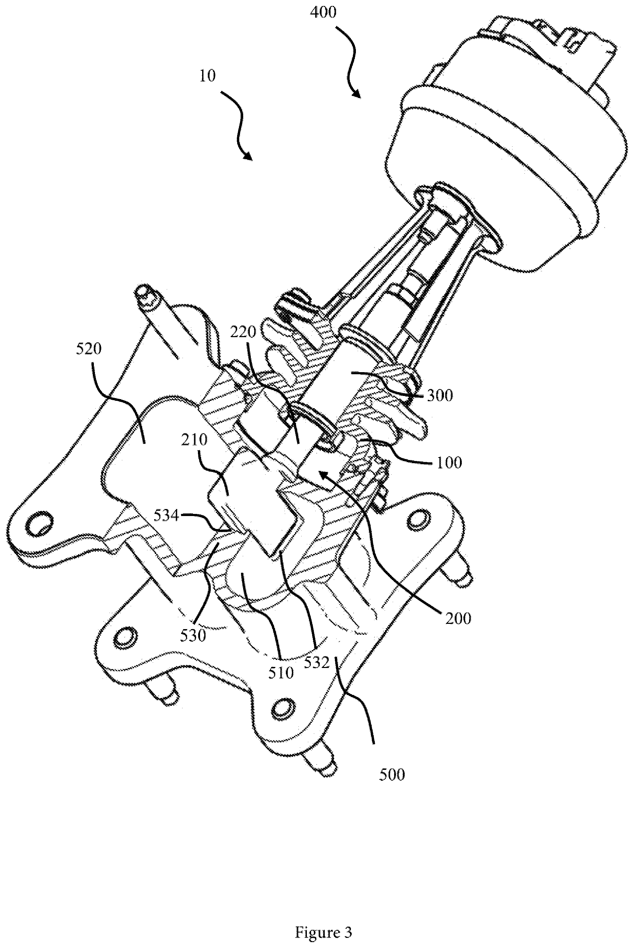

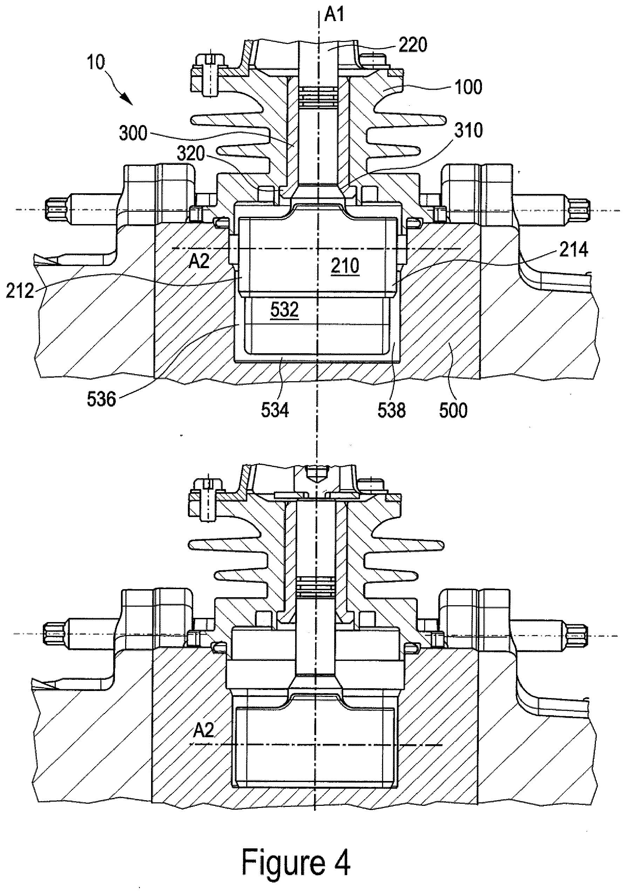

Figure 1 shows a partial section through connection valve 10 according to the invention in an isometric view. Figure 2 shows a cutaway view through connection valve 10. Figure 1 and Figure 2 both show the components of connection valve 10. Connection valve 10 has a housing 100 and a valve body 200 which is arranged in housing 100 to be displaceable along a first axis A1. Valve body 200 comprises a closure part 210. This is designed to close a connection opening 532 between a first volute 510 and a second volute 520 of a multi-flow turbine (see Figure 3 and Figure 4).

The two volutes 510, 520 (in the literature, volute is also used for the term flow) each comprise a channel in turbine housing 500 which is formed at least partially helical/spiral shaped. Volutes 510, 520 and/or the channels of volutes 510, 520 open into an opening to the turbine wheel. The volutes and/or the channels of volutes 510, 520 include, in particular, initially straight channel sections which transition into the helical/spiral shaped channel sections.

Connection valve 10 according to the invention and/or a turbine or an exhaust gas turbocharger with this type of connection valve 10 facilitates that a connection opening 532 between volutes 510, 520 in multi-flow turbines may be opened at high performance demands and thus high exhaust gas volume flows. If the connection opening is released, the exhaust gas flow from all cylinders may use the total maximum possible volume flow through all volutes of turbine housing 500.

Another advantage of connection valve 10 according to the invention exists in its specific configuration. Because connection valve 10 is configured as a gate valve, only very low forces are required to actuate the valve. The installation position of connection valve 10 likewise contributes to a reduction of the required forces, since closure part 210 does not have to be moved directly counter to the flow direction of the exhaust gas volume during opening or during closing of connection valve 10, but instead is displaced approximately perpendicular to the flow direction (see the position of the connection valve in the turbine housing, e.g. in Figure 3). The design of connection valve 10 and its installation position additionally reduce leakage between the channels of volutes 510, 520 in the closed state of connection valve 10.

Additional advantages exist in the very simple structure and the simple production and assembly of connection valve 10, by which means a size scaling for the respective application (as a function of the size of the engines and the corresponding exhaust gas turbochargers) is quite possible. Thus, valve body 200 is equipped as an integral component with closure part 210 and shaft 220 in the embodiments of Figure 1 through Figure 4. This has the advantage that the total number of components of connection valve 10 is low. Thus, the assembly is facilitated and the time required for assembly is shortened.

As shown in Figure 1 through Figure 4, valve body 200 has a shaft 220 which extends arising from closure part 210 and parallel to first axis A1. Shaft 220 extends through a tubular through passage 110 of housing 100. In addition, a bush 300 is provided which is arranged in through passage 110 between shaft 220 and housing 100. Bush 300 functions as a bearing for valve body 200. Bush 300 is produced from a correspondingly selected material (for example, a material combination for shaft/valve body and bush which has a low coefficient of friction). This has the advantage that bush 300 functions as a bearing for shaft 220 and thus for entire valve body 200 and simultaneously facilitates a low friction axial movement of valve body 200. Bush 300 may have a collar 320 on one end (see e.g. Figure 2 and Figure 4), said collar interacts with a corresponding flange surface of housing 100. Collar 320 functions to establish the position and/or to fix bush 300 in housing 100 and prevents slippage of bush 300. Multiple annular grooves for accommodating corresponding sealing means are provided along the circumference of shaft 220. For example, one, two, or three (as shown in the figures) annular grooves may be provided. O-rings may be used, for example, as sealing means. The grooves in combination with the sealing means generate a seal with respect to the surroundings. Thus, leakage of the exhaust gas flow into the surroundings is reduced and/or eliminated.

As is clear in particular in Figure 2 and Figure 4, shaft 220 has a conical section 230. Conical section 230 functions simultaneously as a stop surface and as a sealing surface. Another effective seal with respect to the surroundings is generated via the sealing surface which eliminates leakage of the exhaust gas flow. This is particularly advantageous at high rotational speeds/exhaust gas flows and thus a completely opened connection valve. Conical section 230 is arranged in the area of the exit of shaft 210 out of closure part 210 (see, e.g. Figure 2 and Figure 4). Bush 300 has a funnel shaped section 310 complementary to conical section 230. Funnel-shaped section 310 thus likewise functions as a stop surface and sealing surface and interacts with conical section 230 of shaft 220 to produce the seal.

Closure part 210 of valve body 200 extends primarily along a first main extension direction parallel to a second axis A2. Second axis A2 runs approximately perpendicular to first axis A1. Closure part 210 additionally extends along a second main extension direction parallel to first axis A1 (see Figure 1, Figure 2, and Figure 3). In the embodiment shown, an extension parallel to second axis A2 (length of closure part 210) is greater than an extension parallel to first axis A1 (width of closure part 210). The length and the width of closure part 210 may, however, also be equally large or the width may be greater than the length. Closure part 210 has a first surface and a second surface which are arranged approximately parallel to the plane defined by first axis A1 and second axis A2 (see, e.g. Figure 2). The first and second surfaces may be connected to one another at the ends lying in the direction of the second axis A2 via rounded-off edges 212, 214. Rounded off edge 212 is, for example, quite clear in Figure 1. In addition to the surfaces or upper side[s], closure part 210 additionally has first and second side surfaces. As is clear from Figure 1 through Figure 4, first axis A1 is perpendicular to the first and second side surfaces. Shaft 220 extends arising out of one of the side surfaces.

Figure 1 through Figure 4 also show that housing 100 may have cooling ribs on its outer side. The cooling ribs are arranged in particular in the area of through passage 110 so that heat occurring in this area may be transported away.

Housing 100 additionally has a fixing device for fixing housing 100 to turbine housing 500. A flange that has a plurality of boreholes, which are arranged across the circumference of the flange, is shown in Figure 2. The bore holes themselves may have threads or may function as through holes for screws with which housing 100 is fixed on the turbine housing (see Figure 3). Alternatively, housing 100 may be fixed on turbine housing 500 via, for example, a snap connection, a welded connection, a rivet connection, and/or a plug connection.

In addition, an actuator 400, provided for connection valve 10, is shown in Figure 1 through Figure 3. Actuator 400 is fixed on housing 100 (e.g. via a screw connection as depicted; however, other known connection types may also be provided). Actuator 400 has an actuating element which is connected to shaft 220 in order to be able to displace the shaft along first axis A1.

In Figure 3 and Figure 4, connection valve 10 is shown together with a part of a turbine housing 500 of a multi-flow turbine in cross section. Turbine housing 500 has a first volute 510 and a second volute 520 which are separated from one another by separating wall 530. Connection opening 532 is provided in separating wall 530, and corresponding flow channels of first volute 510 and second volute 520 are connected to one another via said connection opening. Figure 4 above shows a completely opened connection valve 10, and Figure 4 below shows a completely closed connection valve 10. Connection valve 10, as shown in Figure 3 and Figure 4, is coupled to turbine housing 500 in such a way that closure part 210 of valve body 200 moves approximately perpendicular to the flow direction of the exhaust gas in the area of connection opening 532 during opening and closing. In a closed position of connection valve 10, closure part 210 of valve body 200 of connection valve 10 completely closes connection opening 532 (see Figure 4 below).

In order to be able to arrange connection valve 10, as previously described and as shown in Figure 3 and Figure 4, turbine housing 500 has a recess in an outer wall in the area of connection opening 532, said recess allows valve body 200 to protrude into turbine housing 500 so that closure part 210 of valve body 200 may close connection opening 532 in the closed position of connection valve 10.

A first groove 534, arranged approximately parallel to second axis A2, is provided in a first wall of connection opening 532 (see Figure 4 above) and is configured according to a side surface of closure part 210 and accommodates an edge area of closure part 210 in a closed position of connection valve 10 (see Figure 4 below). This means, the side surface of the edge area of closure part 210 interacts with the surface of the groove to effectively close connection opening 532 and to ensure a seal between the two volutes 510, 520.

It is likewise clear in Figure 4 above, that the second and third walls of connection opening 532, lying opposite one another, are arranged parallel to first axis A1 and have second and third grooves 536, 538. Rounded off edges 212, 214 of closure part 210 are guided into second and third grooves 536, 538. This measure also is used for the seal between the two volutes 510, 520 in the closed position of the connection valve due to the interaction of the surfaces of grooves 536 and 538 and rounded off edges 212 and 214. Simultaneously, grooves 536, 538 function as guides for valve body 210 in the area of connection opening 532 of turbine housing 500 during the opening and closing of connection valve 10.

Valve body 200 with closure part 210 may be displaced steplessly in housing 100 by actuator 400, by which means a stepless opening and/or a stepless closing of connection opening 532 is facilitated. This has the advantage that the degree of opening of connection opening 532 may be exactly controlled.

The turbine housing of a multi-flow turbine may be configured in different ways. In the configuration of turbine housing 500 shown in Figure 3, turbine housing 500 comprises a main body (not shown) and a connector. Connection opening 532 and connection valve 10 are arranged in the area of the connector. It is advantageous in this type of design that, according to the installation location and installation position of the exhaust gas turbocharger in the respective application, a turbine according to the invention may be provided with connection valve 10 via a corresponding connector.

The invention additionally comprises an exhaust gas turbocharger with a multi-flow turbine as previously described with a connection valve according to the invention. As mentioned at the outset, an exhaust gas turbocharger of this type facilitates, for example at high performance demands and thus high exhaust gas volume flows, an opening of the connection opening between the volutes of the multi-flow turbine. Thus, the exhaust gas flow from all cylinders may use the total maximum possible volume of all volutes of the turbine housing.
Although the present invention has been described and is defined in the attached claims, it should be understood that the invention may also be alternatively defined according to the following embodiments:
1. A connection valve (10) for a multi-flow turbine of an exhaust gas turbocharger comprising
   a housing (100); and
   a valve body (200) which is arranged in the housing (100) to be displaceable along a first axis (A1),
   characterized in that the valve body (200) has a closure part (210) which is designed to close a connection opening (532) between a first volute (510) and a second volute (520) of a multi-flow turbine.
2. The connection valve according to Embodiment 1, characterized in that the valve body (200) has a shaft (220) which extends arising from the closure part (210) and parallel to the first axis (A1).
3. The connection part according to Embodiment 2, characterized in that the shaft (220) extends through a corresponding tubular through passage (110) of the housing (100).
4. The connection valve according to any one of the preceding embodiments, characterized in that a bush (300) is additionally provided, in particular, in case dependent on Embodiment 2 or Embodiment 3, wherein the bush (300) is arranged in the through passage (110) between the shaft (220) and the housing (100) and functions as a bearing for the valve body (200).
5. The connection valve according to Embodiment 4, characterized in that the bush (300) has a collar (320) on one end which interacts with a corresponding flange surface of the housing (100).
6. The connection valve according to Embodiment 4 or Embodiment 5, characterized in that at least one annular groove for accommodating a sealant is provided along the circumference of the shaft (220).
7. The connection valve according to any one of Embodiments 2 through 6, characterized in that the shaft (220) has a conical section (230), in particular wherein the conical section (230) functions as a stop surface and as a sealing surface.
8. The connection valve according to Embodiment 7, characterized in that the conical section (230) is provided in the area of the exit of the shaft (210) out of the closure part (210).
9. The connection valve according to Embodiment 7 or Embodiment 6, characterized in that the housing (100) or the bush (300) has a funnel-shaped section (310), in particular wherein the funnel-shaped section (310) interacts with the conical section (230) of the shaft (220) as a stop surface and as a sealing surface.
10. The connection valve according to any one of the preceding embodiments, characterized in that the valve body (200) is configured as an integral component with the closure part (210) and the shaft (220).
11. The connection valve according to any one of the preceding embodiments, characterized in that the closure part (210) extends along a first main extension direction parallel to a second axis (A2) which runs approximately perpendicular to the first axis (A1).
12. The connection valve according to Embodiment 11, characterized in that the closure part (210) extends along a second main extension direction parallel to the first axis (A1), in particular wherein an extension parallel to the second axis (A2) is greater than an extension parallel to the first axis (A1).
13. The connection valve according to Embodiment 11 or Embodiment 12, characterized in that the closure part (210) has a first surface and a second surface which are arranged approximately parallel to a plane which is defined by the first axis (A1) and the second axis (A2), in particular wherein the first and second surfaces are connected to one another via rounded off edges (212, 214) at the ends lying in the direction of the second axis (A2).
14. The connection valve according to Embodiment 13, characterized in that the closure part (210) has first and second side surfaces, wherein the first axis (A1) is perpendicular to the first and second side surfaces, in particular wherein the shaft (220) extends from one of the side surfaces.
15. The connection valve according to any one of the preceding embodiments, characterized in that the housing (100) has cooling ribs on the outer side, in particular in the area of the through passage (110).
16. The connection valve according to any one of the preceding embodiments, characterized in that the housing (100) comprises at least one fixing device for fixing the housing (100) on a turbine housing (500).
17. The connection valve according to any one of the preceding embodiments, characterized in that an actuator (400) is provided, wherein an actuating element is connected to the shaft (220) in order to be able to displace the shaft along the first axis (A1).
18. The connection valve according to Embodiment 17, characterized in that the actuator (400) is connected to the housing (100).
19. A multi-flow turbine for an exhaust gas turbocharger, comprising a turbine housing (500), wherein the turbine housing (500) has a first volute (510) and a second volute (520) which are separated from one another by a separating wall (530),
   characterized in that a connection opening (532) is provided in the separating wall (530), and the corresponding flow channels of the first volute (510) and the second volute (520) are connected to one another via said connection opening, and
   that the multi-flow turbine additionally comprises a connection valve (10) according to any one of Embodiments 1 through 18.
20. The multi-flow turbine according to Embodiment 19, characterized in that the connection valve (10) is coupled to the turbine housing (500) in such a way that the closure part (210) of the valve body (200) moves approximately perpendicular to the flow direction of the exhaust gas in the area of the connection opening (532) during opening and closing.
21. The multi-flow turbine according to Embodiment 19 or Embodiment 20, characterized in that the connection valve (10) is coupled to the turbine housing (500) in such a way that the closure part (210) of the valve body (200) completely closes the connection opening (532) in a closed position of the connection valve (10).
22. The multi-flow turbine according to any one of Embodiments 19 through 21, characterized in that a first groove (534), arranged approximately parallel to the second axis (A2), is provided in a first wall of the connection opening (532) and is configured according to a side surface of the closure part (210) and accommodates an edge area of the closure part (210) in a closed position of the connection valve (10).
23. The multi-flow turbine according to any one of Embodiments 19 through 22, characterized in that second and third walls of the connection opening (532), which lie opposite one another, are arranged approximately parallel to the first axis (A1) and have second and third grooves (536, 538), wherein the rounded-off edges (212, 214) of the closure part (210) are guided into the second and third grooves (536, 538).
24. The multi-flow turbine according to any one of Embodiments 19 through 23, characterized in that the housing (100) of the connection valve (10) is fixed on the turbine housing (500).
25. The multi-flow turbine according to any one of Embodiments 19 through 24, characterized in that the turbine housing (500) additionally has a recess in an outer wall in the area of the connection opening (532), said recess allows the valve body (200) to protrude into the turbine housing (500) so that the closure part (210) of the valve body (200) completely closes the connection opening (532) in a closed position of the connection valve (10).
26. The multi-flow turbine according to any one of Embodiments 19 through 25, characterized in that the valve body (200) with the closure part (210) may be steplessly displaced, by which means a stepless opening and/or a stepless closing of the connection opening (532) is facilitated.
27. The multi-flow turbine according to any one of Embodiments 19 through 26, characterized in that the turbine housing (500) comprises a main body and a connector, wherein the connection opening (532) and the connection valve (10) are arranged in the area of the connector.
28. An exhaust gas turbocharger comprising a multi-flow turbine according to any one of Embodiments 19 through 27.

## Claims

1. A connection valve (10) for a multi-flow turbine of an exhaust gas turbocharger comprising
a housing (100); and
a valve body (200) which is arranged in the housing (100) to be displaceable along a first axis (A1),
**characterized in that** the valve body (200) has a closure part (210) which is designed to close a connection opening (532) between a first volute (510) and a second volute (520) of a multi-flow turbine, and
**in that** the valve body (200) has a shaft (220) which extends arising from the closure part (210) and parallel to the first axis (A1), and
**in that** the shaft (220) has a conical section (230), wherein the conical section (230) functions as a stop surface and as a sealing surface, and
**in that** a funnel-shaped section (310) is provided, wherein the funnel-shaped section (310) interacts with the conical section (230) of the shaft (220) as a stop surface and as a sealing surface.

2. The connection valve according to claim 1, **characterized in that** the housing (100) has the funnel-shaped section (310).

3. The connection valve according to claim 1, **characterized in that** a bush (300) is additionally provided, in particular wherein the bush (300) is arranged between the shaft (220) and the housing (100) and functions as a bearing for the valve body (200) and wherein the bush (300) has the funnel-shaped section (310).

4. The connection valve according to claim 3, **characterized in that** the bush (300) has a collar (320) on one end which interacts with a corresponding flange surface of the housing (100).

5. The connection valve according to any one of the preceding claims, **characterized in that** the conical section (230) is provided in the area of the exit of the shaft (210) out of the closure part (210).

6. The connection valve according to any one of the preceding claims, **characterized in that** the closure part (210) extends along a first main extension direction parallel to a second axis (A2) which runs approximately perpendicular to the first axis (Al); and that the closure part (210) extends along a second main extension direction parallel to the first axis (A1), in particular wherein an extension parallel to the second axis (A2) is greater than an extension parallel to the first axis (A1).

7. The connection valve according to claim 6, **characterized in that** the closure part (210) has a first surface and a second surface which are arranged approximately parallel to a plane which is defined by the first axis (A1) and the second axis (A2), in particular wherein the first and second surfaces are connected to one another via rounded off edges (212, 214) at the ends lying in the direction of the second axis (A2); and wherein the closure part (210) has first and second side surfaces, wherein the first axis (A1) is perpendicular to the first and second side surfaces, in particular wherein the shaft (220) extends from one of the side surfaces.

8. The connection valve according to any one of the preceding claims, **characterized in that** the housing (100) has cooling ribs on the outer side, in particular in the area of the through passage (110).

9. The connection valve according to any one of the preceding claims, **characterized in that** an actuator (400) is provided, wherein an actuating element is connected to the shaft (220) in order to be able to displace the shaft along the first axis (A1).

10. A multi-flow turbine for an exhaust gas turbocharger, comprising a turbine housing (500), wherein the turbine housing (500) has a first volute (510) and a second volute (520) which are separated from one another by a separating wall (530),
**characterized in that** a connection opening (532) is provided in the separating wall (530), and the corresponding flow channels of the first volute (510) and the second volute (520) are connected to one another via said connection opening, and
that the multi-flow turbine additionally comprises a connection valve (10) according to any one of claims 1 through 9.

11. The multi-flow turbine according to claim 10, **characterized in that** the connection valve (10) is coupled to the turbine housing (500) in such a way that the closure part (210) of the valve body (200) moves approximately perpendicular to the flow direction of the exhaust gas in the area of the connection opening (532) during opening and closing.

12. The multi-flow turbine according to any one of claims 10 through 11, **characterized in that** a first groove (534), arranged approximately parallel to the second axis (A2), is provided in a first wall of the connection opening (532) and is configured according to a side surface of the closure part (210) and accommodates an edge area of the closure part (210) in a closed position of the connection valve (10).

13. The multi-flow turbine according to any one of claims 10 through 12, **characterized in that** second and third walls of the connection opening (532), which lie opposite one another, are arranged approximately parallel to the first axis (A1) and have second and third grooves (536, 538), wherein rounded-off edges (212, 214) of the closure part (210) are guided into the second and third grooves (536, 538).

14. The multi-flow turbine according to any one of claims 10 through 13, **characterized in that** the valve body (200) with the closure part (210) may be steplessly displaced, by which means a stepless opening and/or a stepless closing of the connection opening (532) is facilitated.

15. An exhaust gas turbocharger comprising a multi-flow turbine according to any one of claims 10 through 14.
